# FASCICULE DE BREVET EUROPEEN

(11) **EP 2 724 047 B1**
(45) Date de publication et mention de la délivrance du brevet: **20.02.2019**
(21) Numéro de dépôt: 12738516.9
(22) Date de dépôt: 22.06.2012
(51) Int. Cl.: F16F 1/02, F16F 1/32, F16F 1/373

(54) **DISPOSITIF DE RESSORT**
FEDERVORRICHTUNG
SPRING DEVICE

(30) Priorité: 22.06.2011 FR 1155480; 22.07.2011 FR 1156680
(43) Date de publication de la demande: 30.04.2014
(73) Titulaire: BORRELLY Spring Washers, 69440 Saint Laurent d'Agny (FR)
(72) Inventeur: VALEMBOIS, Guy, F-31650 Lauzerville (FR)
(74) Mandataire: Rhein, Alain
(86) Numéro de dépôt international: PCT/FR2012/051436
(87) Numéro de publication internationale: WO 2012/175892

(56) Documents cités:
- EP-A1- 0 132 048
- EP-A1- 1 930 049
- WO-A1-2009/030017
- DE-U1- 29 807 170
- GB-A- 857 611
- US-B1- 6 422 791

## Description

La présente invention a pour objet un dispositif de ressort optimisé.

De manière générale un ressort consiste en une pièce utilisant les propriétés élastiques du matériau ou des matériaux dont elle est faite, et qui comprend au moins deux points, ou zones, opposés destinés à être soumis à des sollicitations extérieures.

La difficulté de réaliser des dispositifs de ressort utilisant des sollicitations pures, traction et compression, réside dans le faible déplacement autorisé par de telles sollicitations.

Une approche de solution est ébauchée avec les rondelles classiques dite « BELLEVILLE » ou la sollicitation de traction-compression est majoritaire, mais ou il réside une proportion de flexion dans la pièce suffisamment grande pour rendre l'efficacité de ce type de ressort insuffisante dans certaines applications.

Néanmoins ces rondelles transforment des petites déformations en grands déplacements, ce qui est recherché dans les ressorts, par contre la répartition sans contrainte dans une rondelle BELLEVILLE n'est pas du tout uniforme, ce qui nuit à son efficacité.

On connaît également des dispositifs de ressort constitués de l'assemblage d'au moins deux éléments présentant des caractéristiques différentes, à savoir des éléments rigides et des éléments élastiques de type réalisé en élastomère, ou bien conformés pour être déformables, où lesdits éléments rigides réagissent à une sollicitation au travers desdits éléments élastiques. De tels dispositifs sont décrits dans les documents WO 2009/030017, EP 0 132 048, EP 1 930 049 et US 6 422 791.

La présente invention a pour but de remédier aux divers inconvénients précités, en proposant un dispositif de ressort permettant l'utilisation conjointe des sollicitations pures de traction et de compression tout en ménageant des déplacements significatifs.

Le dispositif de ressort selon l'invention consiste en une pièce utilisant les propriétés élastiques du matériau ou des matériaux dont elle est faite, et qui comprend au moins deux points, ou zones, opposés destinés à être soumis à des sollicitations, et il se caractérise en ce qu'il comprend, entre lesdits points ou zones, une partie intermédiaire comprenant une structure treillis venant de l'assemblage de segments, rectilignes ou non, dont au moins deux s'étendent dans des plans distincts, et tous les deux extérieurement à la direction de la sollicitation, en sorte que lors de ladite sollicitation, l'un soit sollicité longitudinalement en compression et l'autre longitudinalement en traction.

Selon une caractéristique additionnelle du dispositif de ressort selon l'invention, les segments sont réalisés dans des matériaux différents, choisis selon qu'ils sont destinés à être sollicités en traction ou en compression.

Selon un mode de réalisation particulier du dispositif de ressort selon l'invention, il comporte d'une part au moins deux couronnes s'étendant dans deux plans distincts, l'une étant d'un diamètre, ou de dimensions transversales, inférieur à celui, ou celles, de l'autre, lesdites couronnes constituant deux zones opposées destinées à être soumises à des sollicitations, et d'autre part une multiplicité de segments de liaison reliant une couronne à l'autre, et formant avec lesdites couronnes la structure treillis.

Le dispositif de ressort selon l'invention présente ainsi une forme globalement conique.

Lorsque le dispositif de ressort est soumis à un effort de compression la couronne extérieure, la plus grande, est soumise à un effort en extension, tandis que la couronne intérieure, la plus petite, est soumise à un effort de compression.

Un dimensionnement adapté permet d'obtenir une limite en contrainte de traction dans la couronne extérieure identique à la limite en contrainte de compression dans les segments de liaison, comme dans la couronne intérieure. Ce dimensionnement permet l'accumulation d'une énergie optimale dans le dispositif de ressort.

On notera que dans le cas où le dispositif de ressort selon l'invention est réalisé en matériau composite, compte tenu du fait que les matériaux composites ont une tenue en traction supérieure à celle en compression, il est privilégié un mode de chargement inverse pour ce type de forme conique, c'est-à-dire de faire en sorte que le chargement extérieur augmente la conicité.

Dans ce cas de chargement les segments de liaison et la couronne intérieure sont sollicités en traction et la couronne extérieure en compression.

Selon une caractéristique additionnelle du dispositif selon l'invention, la couronne extérieure est constituée de la succession de segments rectilignes s'étendant entre deux segments de liaison voisins.

Selon une variante du dispositif de ressort selon l'invention, il comporte au moins une couronne de grand diamètre qui consiste en un anneau, au moins deux couronnes de plus petit diamètre qui consistent en des bobines coaxiales audit anneau et disposées de part et d'autre dudit anneau, tandis que la structure treillis consiste en un laçage d'un ou plusieurs éléments filaires, cheminant d'une bobine à l'autre en passant sur l'extérieur dudit anneau pour former des segments radiaux ou sensiblement radiaux.

De manière avantageuse, le ou les éléments filaires sont réalisés en matériau composite.

Selon une autre variante du dispositif de ressort selon l'invention, il comporte plusieurs couronnes de grand diamètre qui consistent chacune en un anneau, au moins une couronne de plus petit diamètre qui consiste en un anneau coaxial auxdits anneaux de grand diamètre et disposé entre ces derniers, tandis que la structure treillis consiste un laçage d'un ou plusieurs éléments filaires qui cheminent d'un anneau de grand diamètre à un autre anneau de grand diamètre en passant à l'intérieur dudit anneau de petit diamètre, tout en passant sur l'extérieur desdits anneaux de grand diamètre, et que des embouts de fixation, disposés à chacune des extrémités de la structure treillis, maintiennent les extrémités desdits éléments filaire et assurent la tension appliquée à ceux-ci.

Selon une autre variante du dispositif de ressort selon l'invention, les couronnes consistent en des anneaux coaxiaux de grand et de petit diamètres disposés alternativement, tandis que la structure treillis consiste en une tresse tubulaire en matériau composite, passant extérieurement sur le ou les anneaux de grand diamètre, et intérieurement dans le ou les anneaux de petit diamètre, et que des embouts de fixation disposés à chacune des extrémités de la structure treillis, enserrent les extrémités de ladite tresse en sorte d'assurer la tension de ladite structure treillis.

Les avantages et les caractéristiques du dispositif de ressort selon l'invention, ressortiront plus clairement de la description qui suit et qui se rapporte au dessin annexé, lequel en représente plusieurs modes de réalisation non limitatifs.

Dans le dessin annexé :
- la figure 1 représente une vue schématique en perspective d'un premier mode de réalisation du dispositif de ressort selon l'invention.
- la figure 2 représente une vue schématique en élévation du même premier mode de réalisation.
- la figure 3 représente une vue schématique en plan d'un deuxième mode de réalisation du dispositif de ressort selon l'invention.
- les figures 4a, 4b et 4c représentent des vues schématiques, respectivement en profil, en plan et en perspective, d'une variante du deuxième mode de réalisation.
- la figure 5 représente une vue schématique perspective d'une autre variante du deuxième mode de réalisation.
- la figure 6 représente une vue schématique en perspective et en éclaté d'un troisième mode de réalisation du dispositif de ressort selon l'invention
- la figure 7 représente une vue schématique en perspective du même troisième mode de réalisation.
- la figure 8 représente une vue schématique en perspective d'une variante du même troisième mode de réalisation.
- la figure 9 représente une vue schématique en perspective d'un quatrième mode de réalisation du dispositif de ressort selon l'invention.
- la figure 10 représente une vue schématique en perspective d'un cinquième mode de réalisation du dispositif de ressort selon l'invention.
- la figure 11 représente une vue schématique en perspective d'une partie du même cinquième mode de réalisation.

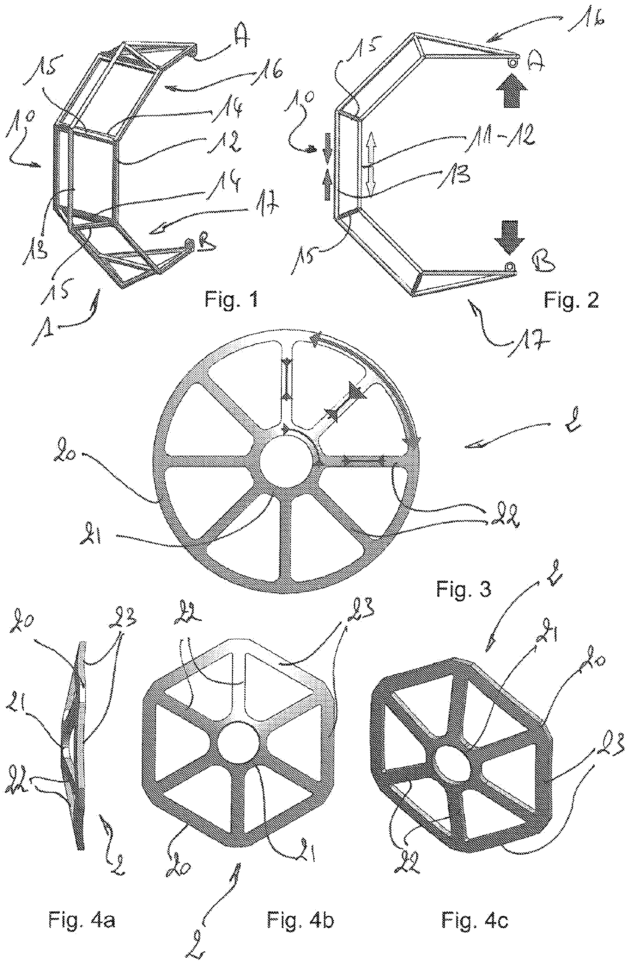

En référence aux figures 1 et 2, on peut voir un premier mode de réalisation du dispositif de ressort selon l'invention, lequel consiste en une structure 1 en forme générale de C, composée de barres assemblées de manière à former un treillis. Le treillis présente des points de fixation A et B pour permettre sa sollicitation du treillis, laquelle sollicitation est destinée à se transformer en traction ou compression de barres élémentaires du treillis.

La structure 1 comporte dans sa zone médiane une partie 10 constituée de l'assemblage de barres, et plus particulièrement trois barres parallèles 11, 12 et 13. Les barres 11 et 12 sont reliées par leur extrémités par des barres 14 en sorte de former avec celles-ci un quadrilatère, tandis que la barre 13 s'étend dans un plan différent de celui contenant ce quadrilatère, et est relié à celui-ci au travers de barres obliques 15 en sorte de former des triangles avec les barres 14.

Par ailleurs, le plan contenant le quadrilatère est intercalé entre celui contenant la barre 13 et la ligne qui joint les points de fixation A et B.

La partie 10 est reliée à chacun des deux points de fixation A et B, au travers d'éléments 16 et 17 constitués chacun d'un assemblage de barres, de construction identique à la partie 10, en sorte que les barres 11 et 12 soient reliées directement aux points A et B, et que la barre 13 soit également reliée directement aux points A et B.

On comprendra que dans le cas d'une sollicitation en traction, c'est-à-dire un éloignement l'un de l'autre des points de fixation A et B, tel que représenté sur la figure 2, est transmis à la partie 10 au travers des éléments 16 et 17, avec pour conséquence que la barre 13, ainsi que toutes celles des éléments 16 et 17 qui la relient aux points A et B, sont soumises à des efforts en compression, tandis que les barres 11 et 12, ainsi que toutes celles des éléments 16 et 17 qui les relient aux points A et B, sont soumises à des efforts en traction.

Dans le cas d'une sollicitation en compression, les barres sont soumises à des efforts inverses.

Chaque barre a une section adaptée pour présenter une contrainte de traction ou de compression uniforme dans toute la structure 1.

Cette particularité permet d'avoir une déformation locale en traction uniforme pour toutes les barres de la structure 1, idem en compression.

Le taux de déformation en compression n'est pas forcément identique au taux de déformation en compression, car les matériaux utilisés ne sont pas forcément de même performance en traction ou en compression.

Cette différentiation peut aussi se faire par zone ou par barre si la structure treillis est réalisée de pièces de matériaux différents.

L'optimisation de la structure en treillis consiste à optimiser les sections de manière à ce que la déformation de chaque barre soit maximale en traction ou en compression (au regard du matériau constituant chaque barre) lorsque la sollicitation extérieure est maximale.

En référence maintenant à la figure 3, on peut voir un deuxième mode de réalisation du dispositif de ressort selon l'invention, lequel consiste en une structure treillis conformée en forme d'une rondelle 2. Cette rondelle treillis 2 comprend deux couronnes rondes coaxiales de diamètres différents et s'étendant dans des plans parallèles différents, à savoir une couronne de plus grand diamètre, dite couronne extérieure 20, et une couronne de plus petit diamètre dite couronne intérieure 21, les deux couronnes étant reliées par des segments radiaux 22, ménageant ainsi des évidements 23.

La rondelle treillis 2 présente ainsi une forme globalement conique, et son écrasement axial a tendance à le remettre à plat, avec pour conséquence l'extension de la couronne extérieure 20 et la compression de la couronne intérieure 21, ainsi que des segments radiaux 21.

Les évidements 23 permettent de donner à la pièce une souplesse garantissant une participation très faible de la flexion comme mode de sollicitation. Les zones sollicitées sont pratiquement en traction ou compression pure.

Un dimensionnement judicieux permet d'obtenir une limite en contrainte de traction dans la couronne extérieure 20 identique à la limite en contrainte de compression dans les segments radiaux 22 comme dans la couronne intérieure 21. Ce dimensionnement permet l'accumulation d'une énergie optimale dans le dispositif de ressort.

La rondelle treillis 2 peut être réalisée dans différents matériaux, métalliques ou autres. Elle peut également être composées de plusieurs matériaux lesquels sont choisis en fonction de leurs caractéristiques et de l'emplacement du segment.

Ainsi, les parties destinées à être sollicitées en traction peuvent être réalisées en métal, câbles, cordes et autres matériaux adaptés à la traction.

Si ces parties destinées à être sollicitées en traction, sont réalisées en matériaux composite comprenant des fibres de renfort, elles peuvent ne pas être, localement ou globalement, noyées dans une résine, car la résine ne participe pas à la tenue mécanique du lien en traction.

Compte tenu du fait que les matériaux composites ont une tenue en traction supérieure à celle en compression, il est privilégié un mode de chargement inverse pour ce type de forme conique, c'est-à-dire de faire en sorte que le chargement extérieur augmente la conicité.

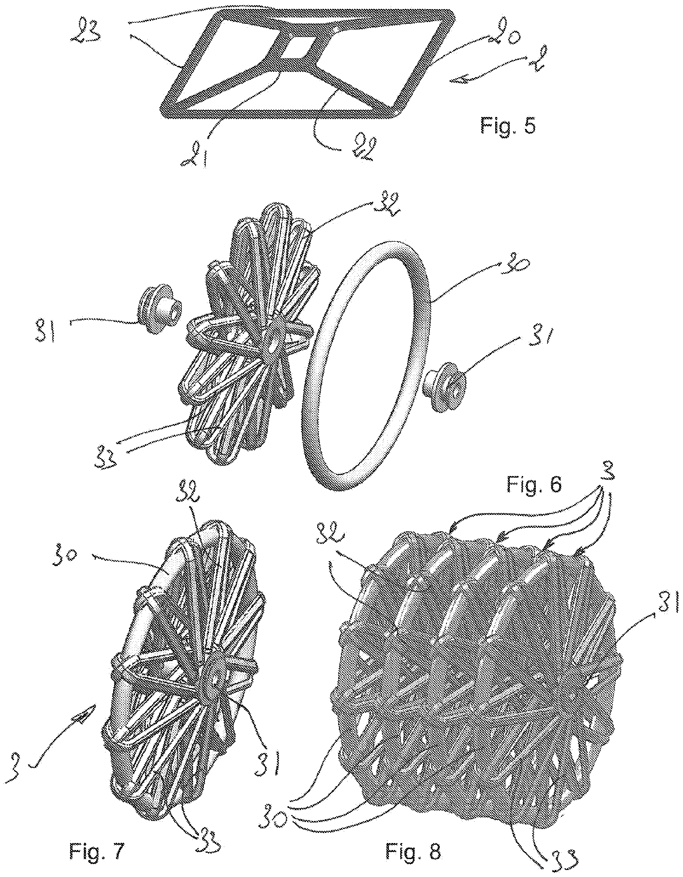

Les figures 4a, 4b, 4c et 5 représentent des variantes de la rondelle treillis 2, dans lesquelles la couronne extérieure 20 est constituée d'une succession de segments rectilignes 23, ce qui permet une mise en compression de cette zone si le nombre de segments radiaux 22 est faible. Cette optimisation peut être conduite sur la couronne intérieure 21, mais présente moins d'intérêt

En référence maintenant aux figures 6 et 7, on peut voir un troisième mode de réalisation du dispositif de ressort selon l'invention, lequel consiste en un disque treillis 3, comprenant, comme cela est visible sur la figure 6, un anneau 30, deux bobines 31, et un laçage 32 en matériau composite conformé en segments 33 qui s'étendent radialement ou sensiblement radialement, entre les bobines 31 et l'anneau 30.

A la fabrication, les bobines 31 sont rapprochées et disposées symétriquement et coaxialement à l'anneau de compression 30, l'ensemble étant maintenu dans cette position pour permettre la mise en place du laçage 32, le maintien étant assuré par un gabarit, par une pièce en matière plastique qui restera incluse dans le ressort, par un mandrin en métal à bas point de fusion, par une pièce en mousse soluble ou généralement par tout noyau classiquement utilisé pour réaliser des formes intérieures en moulage.

Le laçage 32 est obtenu par un bobinage de fibres composites successivement autour de chaque bobine 31 tout en passant sur l'anneau de compression 30. Le laçage 32 est réalisé symétriquement de manière à ne pas induire de torsion du disque treillis 3 pendant la sollicitation.

On comprendra que lorsque le disque treillis 3 est sollicité en compression, c'est-à-dire lorsque l'on tend à faire se rapprocher les bobines 30 l'une de l'autre, les segments 33 sont sollicités en compression, tandis que lorsque le disque treillis 3 est sollicité en traction, c'est-à-dire lorsque l'on tend à faire s'écarter les bobines 31 l'une de l'autre, les segments 33 sont sollicités en traction, et l'anneau en compression.

On notera que les bobines 31 peuvent être taraudées pour permettre la fixation du disque treillis 3 à des éléments extérieurs dans le but d'une sollicitation en traction.

En référence à la figure 8, on peut voir plusieurs disques treillis 3 mis en série, avec toutefois, non obligatoirement, la suppression des bobines 31 entre deux disques treillis 3, le laçage 32 passant alors d'un anneau de compression 30 à l'anneau de compression 30 suivant, les bobines 31 étant réservées à l'inversion du sens du laçage aux extrémités de l'ensemble.

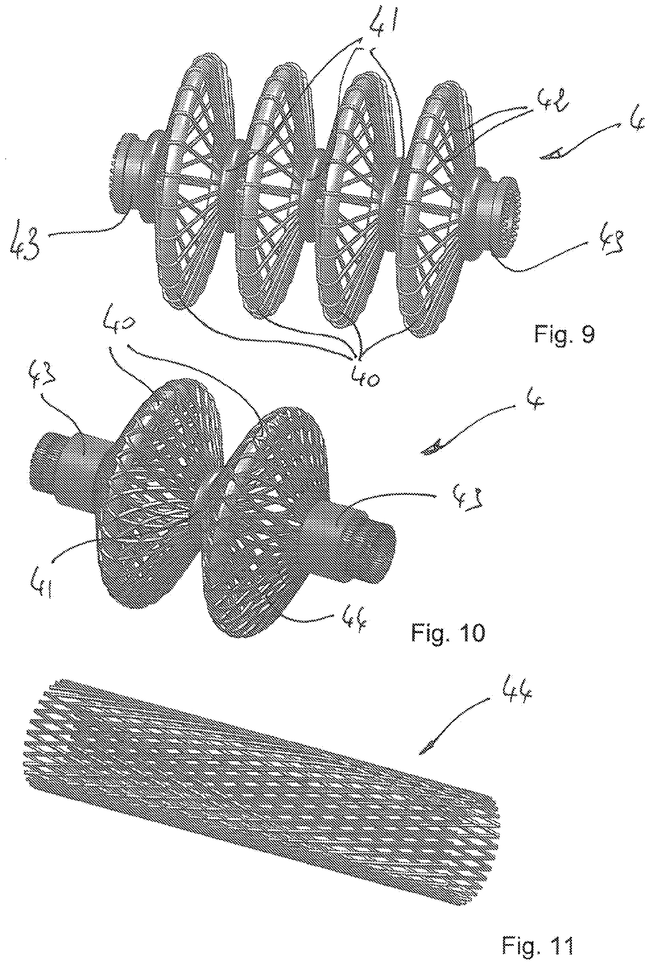

En référence maintenant à la figure 9, on peut voir un quatrième mode de réalisation du dispositif de ressort selon l'invention, lequel consiste en une structure treillis 4 composée d'anneaux de compression 40, d'anneaux de traction 41 de diamètre inférieur à celui des anneaux de compression 40, et d'éléments filaires 42, tels que des joncs, câbles, ou fibres, ainsi qu'à chaque extrémité un embout 43 de fixation des éléments filaires 42.

Les anneaux de compression 40 sont juxtaposés coaxialement, tandis que les anneaux de traction 41 sont chacun intercalés entre deux anneaux de compression 40 successifs, coaxialement à ces derniers. Les éléments filaires 42 s'étendent d'une extrémité à l'autre de la structure treillis 4, en passant à l'extérieur des anneaux de compression 40 et à l'intérieur des anneaux de traction, leurs extrémités étant maintenues par les embouts 43, lesquels assurent la tension appliquée à ces éléments filaires 42, et permettent la mise en charge de l'ensemble : transmission de l'effort extérieur aux éléments filaires via ces embouts 43.

Les éléments filaires 42 s'étendent radialement entre un anneau de compression 40 et un anneau de traction 41, en prenant ensemble une forme conique.

Une sollicitation en traction de la structure treillis 4 provoque l'élongation des éléments filaires 42, la réduction de diamètre des anneaux de compression 40 et l'augmentation de diamètre des anneaux de traction 41.

Ces effets combinés provoquent l'allongement global de la structure treillis 4 par augmentation de la forme conique des éléments filaires 42.

Une telle architecture permet l'usage de matériaux différents adaptés aux différents modes de sollicitation.

On peut ainsi envisager de constituer un ressort présentant des parties métalliques et des parties composites.

En référence maintenant à la figure 10, on peut voir selon une variante de la structure treillis 4, dans laquelle les éléments filaires 42 sont remplacés par une tresse composite de forme tubulaire 44, représentée sur la figure 11, qui existe sous forme de semi produit, et constituée d'un entremêlement de fibres, de direction axiale ou faiblement inclinées par rapport à celle-ci, les embouts 43 consistant en des éléments d'enserrement de la tresse 44.

## Revendications

1. Dispositif de ressort (1; 2; 3; 4) consistant en une pièce utilisant les propriétés élastiques du matériau ou des matériaux dont elle est faite, et qui comprend au moins deux points, ou zones, (A, B; 20, 21; 30; 43) opposés destinés à être soumis à des sollicitations, et **caractérisé en ce qu'**il comprend, entre lesdits points ou zones (A, B; 20, 21; 30; 43), une partie intermédiaire comprenant une structure treillis venant de l'assemblage de segments (11, 12, 13, 14, 15; 20, 21, 22; 30, 31, 33; 40, 41, 42), rectilignes ou non, dont au moins deux s'étendent dans des plans distincts, et tous les deux extérieurement à la direction de la sollicitation, en sorte que lors de ladite sollicitation, l'un soit sollicité longitudinalement en compression et l'autre longitudinalement en traction.

2. Dispositif de ressort (1; 2; 3; 4) selon la revendication 1, **caractérisé en ce que** les segments (11, 12, 13, 14, 15; 20, 21, 22, 23; 30, 31, 33; 40, 41, 42) sont réalisés dans des matériaux différents, choisis selon qu'ils sont destinés à être sollicités en traction ou en compression.

3. Dispositif de ressort (1; 2; 3; 4) selon la revendication 1 ou la revendication 2, **caractérisé en ce qu'**il comporte d'une part au moins deux couronnes (20, 21; 30, 31; 40, 41) s'étendant dans deux plans distincts, l'une (21; 31; 41) étant de diamètre inférieur à celui de l'autre (20; 30; 40), lesdites couronnes (20, 21; 30, 31; 40, 41) constituant deux zones opposées destinées à être soumises à des sollicitations, et d'autre part une multiplicité de segments de liaison (22; 33; 42) reliant une couronne à l'autre, et formant avec lesdites couronnes (20, 21; 30, 31; 40, 41) la structure treillis (2; 3; 4) .

4. Dispositif de ressort (2) selon la revendication 3, **caractérisé en ce que** la couronne extérieure (20) est constituée de la succession de segments rectilignes (23) s'étendant entre deux segments de liaison (22) voisins.

5. Dispositif de ressort (3) selon la revendication 3, **caractérisé en ce qu'**il comporte au moins une couronne de grand diamètre qui consiste en un anneau (30), au moins deux couronnes de plus petit diamètre qui consistent en des bobines (31) coaxiales audit anneau (30) et disposées de part et d'autre dudit anneau (30), tandis que la structure treillis consiste en un laçage 32 d'un ou plusieurs éléments filaires, cheminant d'une bobine (31) à l'autre en passant sur l'extérieur dudit anneau (30) pour former des segments (33) radiaux ou sensiblement radiaux.

6. Dispositif de ressort (4) selon la revendication 3, **caractérisé en ce qu'**il comporte plusieurs couronnes de grand diamètre qui consistent chacune en un anneau (40), au moins une couronne de plus petite diamètre qui consiste en un anneau (41) coaxial auxdits anneaux (40) de grand diamètre et disposé entre ces derniers, tandis que la structure treillis consiste un laçage d'éléments filaires (42) qui cheminent d'un anneau de grand diamètre (40) à un autre anneau de grand diamètre (40) en passant à l'intérieur dudit anneau de petit diamètre (41), tout en passant sur l'extérieur desdits anneaux de grand diamètre (40), et que des embouts de fixation (43), disposés à chacune des extrémités de la structure treillis, maintiennent les extrémités desdits éléments filaire (42) et assurent la tension appliquée à ceux-ci.

7. Dispositif de ressort (4) selon la revendication 3, **caractérisé en ce que** les couronnes consistent en des anneaux coaxiaux de grand et de petit diamètre (40, 41) disposés alternativement, tandis que la structure treillis consiste en une tresse tubulaire (44) en matériau composite, passant extérieurement sur le ou les anneaux de grand diamètre (40), et intérieurement dans le ou les anneaux de petit diamètre (41), et que des embouts de fixation (43) disposés à chacune des extrémités de la structure treillis, enserrent les extrémités de ladite tresse en sorte d'assurer la tension de ladite structure treillis.

## Patentansprüche

1. Federvorrichtung (1; 2; 3; 4), die aus einen Teil besteht, das die elastischen Eigenschaften des Materials oder der Materialen nutzt, aus denen sie gemacht ist, und die mindestens zwei gegenüberliegende Punkte oder Zonen (A, B; 20, 21; 30; 43) umfasst, die dazu bestimmt sind, Beanspruchungen ausgesetzt zu sein, und **dadurch gekennzeichnet, dass** sie zwischen den Punkten oder Zonen (A, B; 20, 21; 30; 43) einen Übergangsteil umfasst, umfassend eine Gitterstruktur, die von der Verbindung gerader oder nicht gerader Segmente (11, 12, 13, 14, 15; 20, 21, 22; 30, 31, 33; 40, 41, 42) herrührt, von denen sich mindestens zwei in unterschiedlichen Ebenen und alle zwei außerhalb der Beanspruchungsrichtung erstrecken, so dass bei der Beanspruchung das eine längs kompressionsbeansprucht wird und das andere längs zugbeansprucht wird.

2. Federvorrichtung (1; 2; 3; 4) nach Anspruch 1, **dadurch gekennzeichnet, dass** die Segmente (11, 12, 13, 14, 15; 20, 21, 22, 23; 30, 31, 33; 40, 41, 42) aus unterschiedlichen Materialien hergestellt sind, die danach ausgewählt sind, ob sie zug- oder kompressionsbeansprucht werden sollen.

3. Federvorrichtung (1; 2; 3; 4) nach Anspruch 1 oder Anspruch 2, **dadurch gekennzeichnet, dass** sie zum einen mindestens zwei Kränze (20, 21; 30, 31; 40, 41) aufweist, die sich in zwei unterschiedlichen Ebenen erstrecken, wobei der eine (21; 31; 41) kleineren Durchmessers ist als der andere (20; 30; 40), wobei die Kränze (20, 21; 30, 31; 40, 41) zwei gegenüberliegende Zonen bilden, die bestimmt sind, Beanspruchungen ausgesetzt zu sein, und zum anderen eine Vielzahl von Verbindungssegmenten (22; 33; 42), die einen Kranz mit dem anderen verbinden und mit den Kränzen (20, 21; 30, 31; 40, 41) die Gitterstruktur (2; 3; 4) bilden.

4. Federvorrichtung (2) nach Anspruch 3, **dadurch gekennzeichnet, dass** der Außenkranz (20) von der Abfolge gerader Segmente (23) gebildet ist, die sich zwischen zwei benachbarten Verbindungssegmenten (22) erstrecken.

5. Federvorrichtung (3) nach Anspruch 3, **dadurch gekennzeichnet, dass** sie mindestens einen Kranz großen Durchmessers aufweist, der aus einem Ring (30) besteht, mindestens zwei Kränze kleineren Durchmessers, die aus zu dem Ring (30) koaxialen Spulen (31) bestehen und beiderseits des Rings (30) angeordnet sind, wogegen die Gitterstruktur aus einer Verschnürung (32) von einem oder mehreren Drahtelementen besteht, die von einer Spule (31) zur anderen gehen und dabei über außerhalb des Rings (30) verlaufen, um radiale oder etwa radiale Segmente (33) zu bilden.

6. Federvorrichtung (4) nach Anspruch 3, **dadurch gekennzeichnet, dass** sie mehrere Kränze großen Durchmessers aufweist, die jeweils aus einem Ring (40) bestehen, mindestens einen Kranz kleineren Durchmessers, der aus einem zu den Ringen (40) großen Durchmessers koaxialen Ring (41) besteht und zwischen diesen angeordnet ist, wogegen die Gitterstruktur aus einer Verschnürung von Drahtelementen (42) besteht, die von einem Ring großen Durchmessers (40) zu einem anderen Ring großen Durchmessers (40) gehen und dabei innerhalb des Rings kleinen Durchmessers (41) verlaufen und dabei über außerhalb der Ringe großen Durchmessers (40) verlaufen, und dass Befestigungsspitzen (43), die an jedem der Enden der Gitterstruktur angeordnet sind, die Enden der Drahtelemente (42) halten und die auf diese ausgeübte Spannung sichern.

7. Federvorrichtung (4) nach Anspruch 3, **dadurch gekennzeichnet, dass** die Kränze aus koaxialen Ringen großen und kleinen Durchmessers (40, 41) bestehen, die abwechselnd angeordnet sind, wogegen die Gitterstruktur aus einem rohrförmigen Geflecht (44) aus Verbundmaterial besteht, das außen auf dem oder den Ringen großen Durchmessers (40) und innen in dem oder den Ringen kleinen Durchmessers (41) verläuft, und dass Befestigungsspitzen (43), die an jedem der Enden der Gitterstruktur angeordnet sind, die Enden des Geflechts derart umschließen, dass die Spannung der Gitterstruktur gesichert ist.

## Claims

1. A spring device (1; 2; 3; 4) consisting of a part using the resilient properties of the material or materials, which it is made of, and which includes at least two opposite points, or areas, (A, B; 20, 21; 30; 43) to be subjected to biases, and wherein it comprises, between said points or areas (A, B; 20, 21; 30; 43), an intermediate portion comprising a mesh structure resulting from the assembly of segments (11, 12, 13, 14, 15; 20, 21, 22; 30, 31, 33; 40, 41, 42), whether rectilinear or not, at least two of which extend in different planes, and both outwardly with respect to the direction of the bias, so that during said biasing, one is biased longitudinally in compression and the other one longitudinally in traction.

2. The spring device (1; 2; 3; 4) according to claim 1, wherein the segments (11, 12, 13, 14, 15; 20, 21, 22, 23; 30, 31, 33; 40, 41, 42) are made of different materials chosen according to whether they are intended to be biased in traction or compression.

3. The spring device (1; 2; 3; 4) according to claim 1 or claim 2, wherein it includes on the one hand at least two crowns (20, 21; 30, 31; 40, 41) extending in two different planes, one (21; 31; 41) being of a diameter or transverse dimensions smaller than that or those of the other one (20; 30; 40), said crowns rings (20, 21; 30, 31; 40, 41) constituting two opposite areas to be subjected to biases, and on the other hand a plurality of connection segments (22; 33; 42) connecting one crown to the other and forming with said crowns (20, 21; 30, 31; 40, 41) the mesh structure (2; 3; 4).

4. The spring device (2) according to claim 3, wherein the outer crown (20) consists of the succession of rectilinear segments (23) extending between two neighboring connection segments (22).

5. The spring device (3) according to claim 3, wherein it includes at least one crown of a large diameter, which consists of a ring (30), at least two crowns of a smaller diameter, which consist of coils (31) coaxial to said ring (30) and arranged on both sides of said ring (30), whereas the mesh structure consists of a lacing (32) of one or more wire elements, extending from one coil (31) to the other one while passing on the outer side of said ring (30), in order to form radial or substantially radial segments (33).

6. The spring device (4) according to claim 3, wherein it includes several crowns of a large diameter, which each consist of a ring (40), at least one crown of a smaller diameter, which consists of a ring (41) coaxial to said rings (40) of a large diameter and arranged between the latter, while the mesh structure consists of a lacing of wire elements (42), which extend from one ring of a large diameter (40) to another ring of a large diameter (40) while passing inside said ring of a small diameter (41), while passing on the outer side of said rings of a large diameter (40), and securing ferrules (43), arranged at each end of the mesh structure, hold the ends of said wire elements (42) and ensure the tension applied thereto.

7. The spring device (4) according to claim 3, wherein the crowns consist of coaxial rings of a large and a small diameter (40, 41) arranged alternately, while the mesh structure consists of a tubular braid (44) of composite material passing externally on the ring or rings of a large diameter (40), and internally in the ring or rings of a small diameter (41), and securing ferrules (43) disposed at each end of the mesh structure enclose the ends of said braid, so ensure the tension of said mesh structure.
